# EUROPÄISCHE PATENTSCHRIFT

(11) **EP 1 635 100 B1**
(45) Veröffentlichungstag und Bekanntmachung des Hinweises auf die Patenterteilung: **19.03.2008**
(21) Anmeldenummer: 05108169.3
(22) Anmeldetag: 06.09.2005
(51) Int. Cl.: F16L 5/04, H02G 3/22

(54) **Durchführungsvorrichtung**
Lead-through device
Dispositif de traversée

(30) Priorität: 11.09.2004 DE 102004043970
(43) Veröffentlichungstag der Anmeldung: 15.03.2006
(73) Patentinhaber: HILTI Aktiengesellschaft, 9494 Schaan (LI)
(72) Erfinder: Münzenberger, Herbert, 65191, Wiesbaden (DE)
(74) Vertreter: Wildi, Roland

(56) Entgegenhaltungen:
- WO-A-81/02815
- DE-C1- 19 830 986
- FR-A- 2 171 021
- US-A- 4 302 917

## Beschreibung

### Technisches Gebiet

Die Erfindung betrifft eine Vorrichtung zur Aufnahme eines Leitungsstranges, der im Oberbegriff des Patentanspruchs 1 genannten Art.

### Stand der Technik

Zur Durchführung von Leitungssträngen, wie z. B. Kabel oder Rohrleitungen durch Bauteile, wie Wände, Decken und dergleichen werden in den Bauteilen Durchbrüche vorgesehen, die insbesondere gegen die Ausbreitung von in einem Brandfall entstehendem Feuer oder Rauchgas durch den Durchbruch brandsicher und rauchgasdicht verschlossen werden. Es sind verschiedene Vorrichtungen insbesondere zum brandsicheren und rauchgasdichten Durchführen eines Leitungsstranges durch einen in einem Bauteil ausgebildeten Durchbruch mit einem elastischen Dichtkörper bekannt, der zumindest eine Durchführöffnung aufweist.

Aus der EP 0 429 916 A2 ist beispielsweise eine modulare Vorrichtung zur dichten Durchführung von Leitungssträngen bekannt, die als Dichtkörper zwei Teile aufweist, die an jeweils dem anderen Teil zugewandten Seite angeordnete halbzylindrische Ausnehmungen aufweisen. In dem von den halbzylinderförmigen Ausnehmungen gebildeten Raum ist eine zylinderförmige Durchführöffnung mit einem wesentlich geringeren Durchmesser als jener der halbzylindrischen Ausnehmungen angeordnet. Der restliche Raum ist von einem Hohlzylinder ausgefüllt, der in Längsrichtung in zwei im Wesentlichen gleiche Hohl-Halbzylinder geteilt ist, die aus mehreren aufeinanderliegenden, voneinander lösbaren Schichten bestehen.

Aus der GB 2 186 443 A ist eine weitere modulare Vorrichtung mit zweiteiligen Dichtkörpern und Hohlzylindern bekannt, die aus mehreren konzentrisch aufeinanderliegenden, voneinander lösbaren Schichten bestehen. Die Dichtkörper sind in einem Rahmen mit einer Verspannvorrichtung angeordnet, so dass diese Vorrichtung auch im Schiffsbau zur flüssigkeitsdichten Abschottung verwendbar ist.

Nachteilig an den bekannten Lösungen ist, dass beim Aufbau der Vorrichtungen eine Vielzahl von einzelnen Elementen benötigt werden, die zur Erstellung der Abschottung aufwändig aufeinander gestapelt werden müssen. Zudem müssen bereits beim Aufbau der Vorrichtung die hindurchzuführenden Leitungsstränge eingelegt werden. Werden nur Leitungsstrang-Abschnitte in der erstellten Vorrichtung angeordnet, müssen beidseitig des Bauteils Anschlüsse ausgebildet werden, die konstruktiv und ästhetisch zumeist unerwünscht sind.

Die DE 39 43 165 A1 zeigt eine Vorrichtung zur brandsicheren Abschottung einer Leitungsdurchführung in einem Bauteil, die einen Rahmen und ein Formteil aufweist. Das Formteil besitzt durch Stanzungen hergestellte Durchführöffnungen, die durch die gestanzten Teile verschlossen sind. Zur Durchführung eines Leitungsstrangs werden die gestanzten Teile herausgestossen und der Leitungsstrang hindurchgeführt. Allfällige Zwischenräume zwischen dem Leitungsstrang und dem Formkörper werden mittels einer Dichtmasse verschlossen.

Nachteilig an dieser Lösung ist, dass das Verschliessen allfällig vorhandener Zwischenräume aufwändig ist. Entsprechen die Innenabmessungen der Durchführöffnung den Aussenabmessungen des hindurchzuführenden Leitungsstrangs beziehungsweise weisen die Aussenabmessungen des hindurchzuführenden Leitungsstrangs grössere Abmessungen als die Innenabmessungen der Durchführöffnung auf, so ergibt sich beim Hindurchführen des Leitungsstrangs durch die Vorrichtung ein erheblicher Reibungswiderstand, der das Hindurchführen des Leitungsstrangs behindert, so dass der Formkörper beim Hindurchführen Schaden nehmen kann. Zur Gewährleistung der Rauchgasdichtigkeit müssen dabei entstehende Spalte wieder mit einer Dichtmasse verschlossen werden.

Aus der DE 298 18 819 U1 ist eine Vorrichtung zur brandsicheren Abschottung einer Leitungsdurchführung in einem Bauteil bekannt, bei der ein um den Leitungsstrang angeordneter, elastischer Dichtkörper über zwei Spannplatten derart zusammengepresst wird, dass dieser sich an die Leibung der Durchführung und an die Aussenwandung des Leitungsstrangs dichtend anlegt. Nachteilig an dieser Lösung ist, dass das Verspannen der Spannplatten nur bei einfach zugänglichen Durchbrüchen ohne einen erheblichen Aufwand möglich ist. Des Weiteren ist diese Vorrichtung nur zur Durchführung von einem Leitungsstrang durch den Durchbruch geeignet.

Aus der US 4,302,917 A ist eine Vorrichtung zum brandsicheren und rauchgasdichten Durchführen eines Leitungsstrangs durch einen in einem Bauteil ausgebildeten Durchbruch bekannt, bei der ein Dichtkörper in den Bauteil eingegossen oder eingemauert wird. Mit einem hohlzylindrischen, eine Dornspitze aufweisenden Stosswerkzeug wird in den Dichtkörper eine Durchführöffnung für den hindurchzuführenden Leitungsstrang erstellt. Die Dornspitze wird entfernt und der Leitungsstrang durch die von dem hohlzylindrischen Stosswerkzeug geschaffene Durchführöffnung hindurchgeführt. Anschliessend wird das hohlzylindrische Stosswerkzeug entgegen der Setzrichtung aus dem Dichtkörper herausgezogen, wobei sich der ausdehnende Dichtkörper an den Leitungsstrang anlegt. Das hohlzylindrische Stosswerkzeug ist beispielsweise aus zwei Halbschalen gebildet, um diese einfach von dem hindurchgeführten Leitungsstrang entfernen zu können.

Aus der WO 81/02815 A1 ist ein weiteres Verfahren zur Erstellung einer Leitungsdurchführung durch einen Durchbruch in einem Bauteil bekannt, bei dem zuerst ein elastischer Dichtkörper in dem Bauteil angeordnet und anschliessend mit einem separaten Stosswerkzeug, das eine Hülse und eine entfernbare Dornspitze aufweist, eine Durchführöffnung in dem Dichtkörper erstellt wird. Nach dem Hindurchführen des Leitungsstrangs durch die Durchführöffnung wird die Hülse aus der Durchführöffnung entfernt, wobei sich der ausdehnende Dichtkörper an die Aussenwandung des hindurchgeführten Leitungsstrangs anlegt.

Nachteilig an den bekannten Lösungen ist, dass zur Erstellung der Durchführöffnung im Dichtkörper jeweils ein Stosswerkzeug und eine geeignete Vorrichtung zur Betätigung des Stosswerkzeuges erforderlich sind.

### Darstellung der Erfindung

Aufgabe der Erfindung ist es, ein Verfahren mit einer Vorrichtung zur Aufnahme eines Leitungsstrangs durch einen in einem Bauteil ausgebildeten Durchbruch zu schaffen, das eine einfache Belegung der Vorrichtung mit einem Leitungsstrang unabhängig vom Baufortschritt ermöglicht und insbesondere die Rauchgasdichtigkeit gewährleistet.

Die Aufgabe ist durch die Merkmale des unabhängigen Anspruchs gelöst. Vorteilhafte Weiterbildungen sind in den Unteransprüchen dargelegt.

Gemäss der Erfindung weist ein Verfahren mit einer Vorrichtung zur Aufnahme eines Leitungsstranges durch einen in einem Bauteil ausgebildeten Durchbruch, die einen elastischen Dichtkörper mit zumindest einer Durchführöffnung aufweist, wobei in der Durchführöffnung eine entfernbare Führungshülse vorgesehen ist, deren Aussenabmessungen die Innenabmessungen der Durchführöffnung im entspannten Zustand des Dichtkörpers übersteigen, folgende Schritte auf:
- Einbau der Vorrichtung im Bauteil, wobei die entfernbare Führungshülse bereits in der zumindest einen Durchführöffnung vorgesehen ist;
- Hindurchführen eines Leitungsstranges durch die zumindest eine Durchführöffnung des Dichtkörpers;
- Herausziehen der entfernbare Führungshülse aus der Durchführöffnung, wobei sich der elastisch rückstellbare Dichtkörper ausdehnt und an die Aussenwandung des hindurchgeführten Leitungsstrangs anlegt.

Da die Aussenabmessungen der entfernbaren Führungshülse die Innenabmessungen der Durchführöffnung im entspannten Zustand übersteigen, ist zumindest der Bereich des elastischen Dichtkörpers um die Führungshülse herum komprimiert. Der hindurchzuführende Leitungsstrang kann einfach durch die zumindest eine Führungshülse hindurchgeführt werden. Nach dem Hindurchführen des Leitungsstranges wird die Führungshülse aus dem elastischen Dichtkörper herausgezogen, wobei sich der elastisch rückstellbare Dichtkörper ausdehnt und sich an die Aussenwandung des Leitungsstrangs anlegt. Dabei wird der Durchbruch mit dem hindurchgeführten Leitungsstrang rauchgasdicht verschlossen, wobei keine zusätzlichen Werkzeuge oder die Verwendung von Dichtmassen zur Gewährleistung der rauchgasdichten Abschottung benötigt werden.

Der elastische Dichtkörper wird in den Durchbruch gegebenenfalls mittels einer Hilfsvorrichtung komprimiert eingesetzt. Der Dichtkörper kann einen beliebigen Querschnitt, wie z. B. einen kreisrunden, ovalen, rechteckigen oder polygonalen Querschnitt aufweisen. Die Führungshülse weist beispielsweise einen kreisrunden, ovalen, rechteckigen oder polygonalen Querschnitt auf und ist vorteilhaft auf den Querschnitt des hindurchzuführenden Leitungsstranges abgestimmt.

In einer vorteilhaften Anwendung des erfindungsgemässen Verfahrens ist der elastische Dichtkörper von einem zusätzlichen Rahmenteil umgeben. Die Vorrichtung kann in das Bauteil eingegossen oder eingemauert werden.

Vorzugsweise ist die Führungshülse mehrteilig ausgebildet. Nach dem Herausziehen der Führungshülse können die einzelnen Teile der Führungshülse von dem hindurchgeführten Leitungsstranges entfernt werden, ohne dass die Führungshülse bis über das freie Ende des hindurchgeführten Leitungsstranges geschoben werden muss. In Abhängigkeit der Ausgestaltung des Querschnitts der Führungshülse ist diese aus zwei, drei, vier oder mehr Teilen zusammengesetzt. In einer bevorzugten Ausführung der erfindungsgemässen Vorrichtung ist die Führungshülse aus zwei Halbschalen gebildet, die einen runden oder ovalen Querschnitt ausbilden.

Bevorzugt sind mehrere Führungshülsen in einem Dichtkörper angeordnet, so dass mehrere Leitungsstränge durch einen Dichtkörper hindurchführbar sind. Die Führungshülsen können unterschiedlich grosse Querschnitte und verschiedene Querschnittsausbildungen aufweisen. Weisen nicht belegte Führungshülsen einen kleinen Querschnitt, z. B. einen runden Querschnitten mit einem Durchmesser von weniger als 1.5 cm auf, können diese Führungshülsen ebenfalls aus dem Dichtkörper entfernt werden. Der elastisch rückstellbare Dichtkörper dehnt sich dabei derart aus, dass die Durchführöffnung verschlossen und somit die Rauchgasdichtigkeit der Vorrichtung gewährleistet ist.

Vorteilhaft ist der elastische Dichtkörper aus einem intumeszierenden Material gefertigt, das in einem Brandfall expandiert und eine brandsichere Abschottung über die geforderte Brandschutzdauer sicherstellt. Alternativ zu einem intumeszierenden Material kann der elastische Dichtkörper auch aus einem anderen brandsicheren beziehungsweise zumindest über eine gewisse Zeit feuerbeständigem Material gefertigt sein.

Bevorzugt ist zumindest ein entfernbares Verschlusselement in der Führungshülse vorgesehen. Bei nicht belegten Führungshülsen mit einem grossen Querschnitt verbleibt beim Entfernen der Führungshülse aus dem elastischen Dichtkörper trotz der elastischen Rückstellung des Dichtkörpers eine Öffnung, durch die Rauchgas hindurchdringen könnte. Mit zumindest einem entfernbaren Verschlusselement in der Führungshülse ist die rauchgasdichte Abschottung der Vorrichtung auch bei unbelegten, im Dichtkörper verbleibenden Führungshülsen gegeben, wobei eine allfällige spätere Belegung weiterhin gegeben ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von Ausführungsbeispielen näher erläutert. Es zeigen:
- Fig. 1: Einen Längsschnitt durch ein erstes Ausführungsbeispiel der erfindungsgemässen Vorrichtung entlang I-I in Fig. 2;
- Fig. 2: eine Ansicht auf die in Fig. 1 dargestellte Vorrichtung;
- Fig. 3: ein zweites Ausführungsbeispiel in einem Montagezustand im Längsschnitt;
- Fig. 4: einen Längsschnitt durch ein drittes Ausführungsbeispiel der erfindungsgemässen Vorrichtung entlang IV-IV in Fig. 5; und
- Fig. 5: eine Ansicht aus der Ebene V-V auf die in Fig. 4 dargestellte Vorrichtung.

Grundsätzlich sind in den Figuren gleiche Teile mit den gleichen Bezugszeichen versehen.

### Wege zur Ausführung der Erfindung

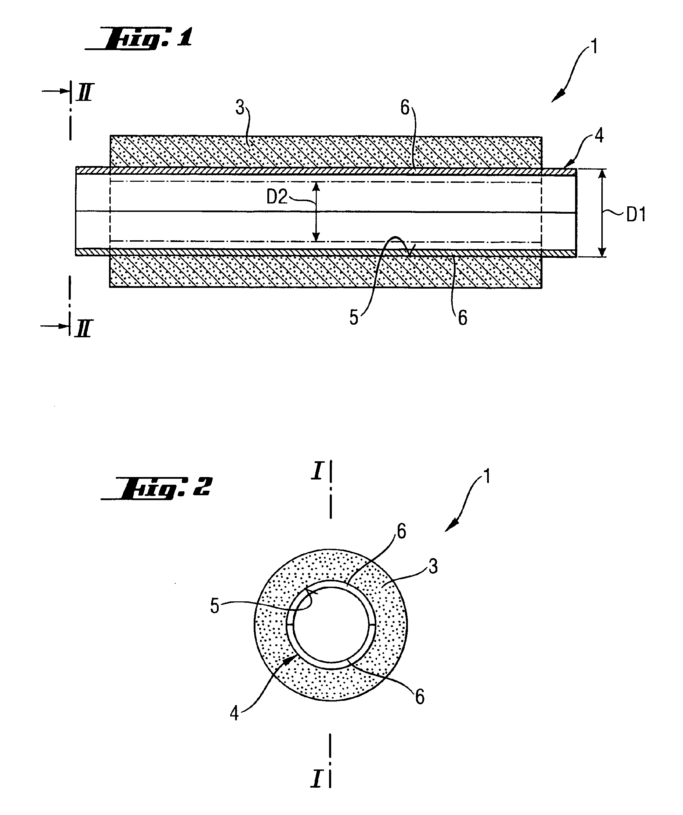

Die in den Fig. 1 und Fig. 2 dargestellte erfindungsgemässe Vorrichtung 1 weist einen elastischen, im Querschnitt zylindrischen Dichtkörper 3 mit einer Durchführöffnung 5 auf. In der Durchführöffnung 5 ist eine zweiteilige, entfernbare Führungshülse 4 vorgesehen. Der Aussendurchmesser D1 der zweiteiligen Führungshülse 4 übersteigt den Innendurchmesser D2 der Durchführöffnung 5 im entspannten Zustand, so dass der elastische Dichtkörper 3 zumindest in dem die Führungshülse 4 umgebenden Bereich komprimiert ist. Die Führungshülse 4 ist aus zwei Halbschalen 6 zusammengesetzt und aus dem Dichtkörper 3 entfernbar. Die Vorrichtung 1 wird als Ganzes in einen abzuschottenden Durchbruch eingesetzt.

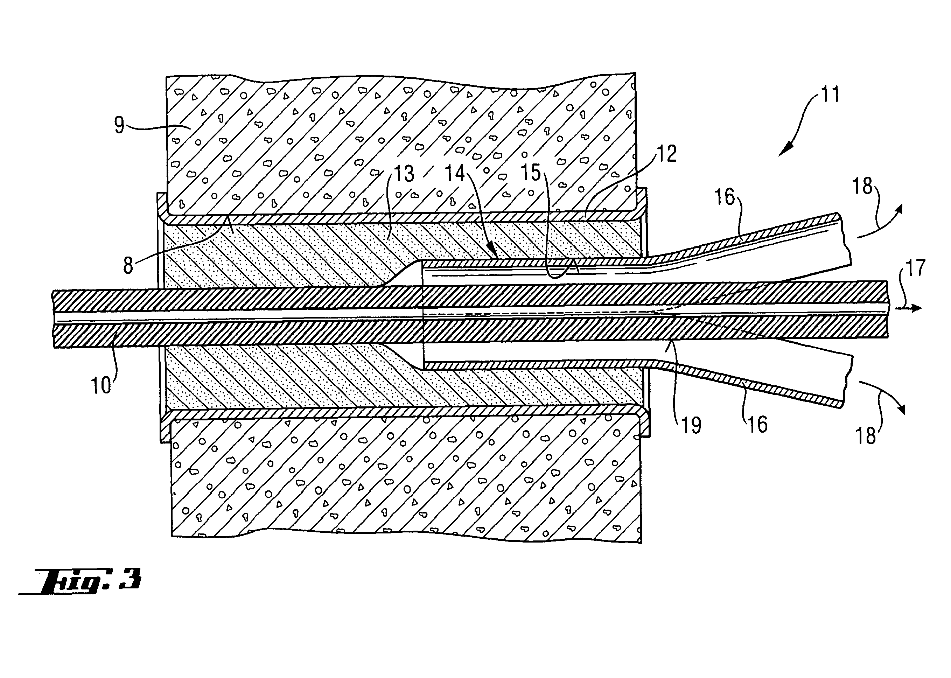

Die in Fig. 3 gezeigte erfindungsgemässe Vorrichtung 11 insbesondere zum brandsicheren und rauchgasdichten Durchführen eines Leitungsstranges 10 durch einen, in einem Bauteil 9 ausgebildeten Durchbruch 8 umfasst gegenüber der, in den Fig. 1 und 2 dargestellten Vorrichtung 1 ein Rahmenteil 12, in dem der aus einem intumeszierenden Material gefertigte, elastische Dichtkörper 13 mit der Durchführöffnung 15 angeordnet ist. In der Durchführöffnung 15 ist eine zweiteilige, aus dem Dichtkörper 13 entfernbare Führungshülse 14 vorgesehen, die aus zwei Halbschalen 16 gebildet ist.

Nachfolgend wird anhand der Fig. 3 die Verwendung der Vorrichtung 11 dargelegt. Für die in den anderen Figuren dargelegten Ausführungsformen gilt die nachfolgende Beschreibung sinngemäss.

Die Vorrichtung 11 wird in die Schalung für das Bauteil 9, hier beispielsweise eine Betonwand, eingelegt und bei der Herstellung des Bauteils 9 eingegossen. Wird das Bauteil 9 gemauert, so kann die Vorrichtung 11 in das Bauteil 9 beim Erstellen desselben eingemauert werden. Bei der Belegung der Vorrichtung 11 mit einem Leitungsstrang 10, hier ein Elektrokabel, wird dieses z. B. in Richtung des Pfeils 17 durch die, in der Durchführöffnung 15 vorgesehene Führungshülse 14 hindurchgeführt. Anschliessend werden die beiden Halbschalen 16 der Führungshülse 14 in Richtung der Pfeile 18 aus dem Dichtkörper 13 herausgezogen, wobei sich der zumindest im Bereich der Führungshülse 14 komprimierte Dichtkörper 13 wieder ausdehnt und dichtend an der Aussenwandung 19 des Leitungsstranges 10 zu liegen kommt.

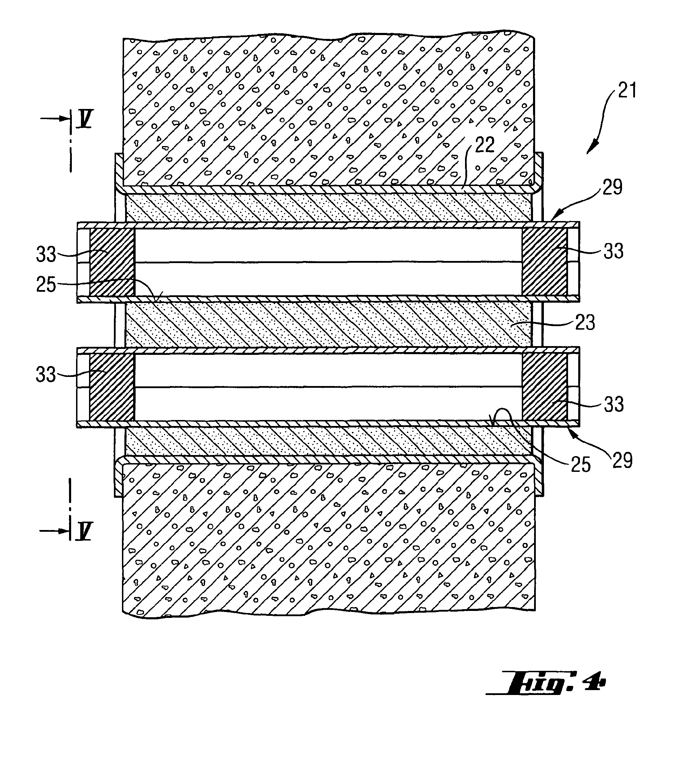

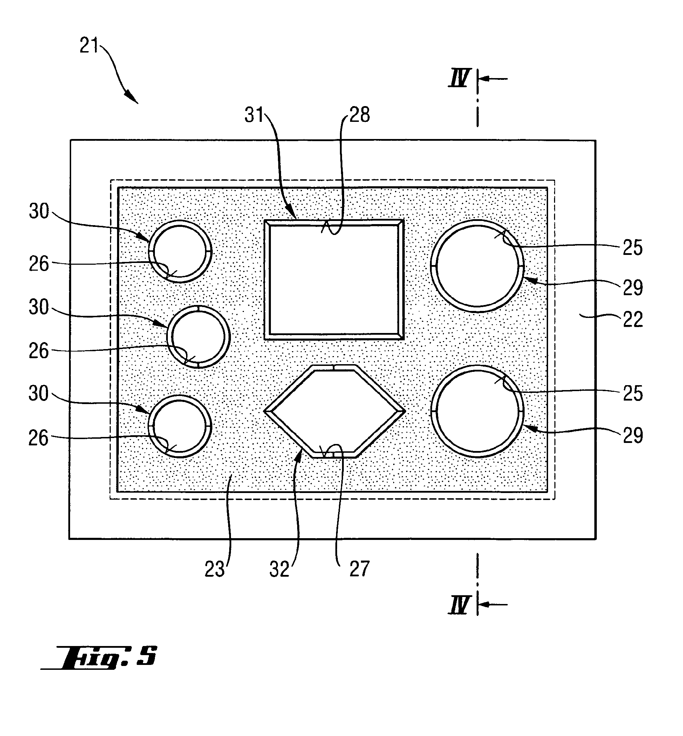

Die in den Fig. 4 und Fig. 5 dargestellte erfindungsgemässe Vorrichtung 21 weist einen rechteckigen Rahmenteil 22 auf, in dem ein elastischer, im Querschnitt rechteckiger Dichtkörper 23 mit mehreren Durchführöffnungen 25, 26, 27 und 28 angeordnet ist. Die Durchführöffnungen 25, 26, 27 und 28 weisen unterschiedliche Querschnitte und Abmessungen auf. Die Durchführöffnungen 25 und 26 weisen jeweils einen runden Querschnitt auf, in denen jeweils eine zweiteilige Führungshülse 29 bzw. 30 vorgesehen ist. Die Durchführöffnung 28 weist einen rechteckigen Querschnitt auf, in der eine vierteilige Führungshülse 31 vorgesehen ist. Die Durchführöffnung 27 weist einen sechseckigen Querschnitt auf, in der ebenfalls eine vierteilige Führungshülse 32 vorgesehen ist. In den Führungshülsen 29 sind entfernbare Verschlusselemente 33 vorgesehen, die bei einer Belegung der Durchführöffnung 25 entfernt werden.

## Patentansprüche

1. Verfahren mit einer Vorrichtung (1; 11; 21) zur Aufnahme eines Leitungsstranges (10) durch einen in einem Bauteil (9) ausgebildeten Durchbruch (8), die einen elastischen Dichtkörper (3; 13; 23) mit zumindest einer Durchführöffnung (5; 15; 25, 26, 27, 28) aufweist, wobei in der Durchführöffnung (5; 15; 25, 26, 27, 28) eine entfernbare Führungshülse (4; 14; 29, 30, 31, 32) vorgesehen ist, deren Aussenabmessungen die Innenabmessungen der Durchführöffnung (5; 15; 25, 26, 27, 28) im entspannten Zustand des Dichtkörpers (3; 13; 23) übersteigen, **gekennzeichnet durch** folgende Schritte:
- Einbau der Vorrichtung (1; 11; 21) im Bauteil (9), wobei die entfernbare Führungshülse (4; 14; 29, 30, 31, 32) bereits in der zumindest einen Durchführöffnung (5; 15; 25, 26, 27, 28) vorgesehen ist;
- Hindurchführen eines Leitungsstranges (10) **durch** die zumindest eine Durchführöffnung (5; 15; 25, 26, 27, 28) des Dichtkörpers (3; 13; 23);
- Herausziehen der entfernbare Führungshülse (4; 14; 29, 30, 31, 32) aus der Durchführöffnung (5; 15; 25, 26, 27, 28), wobei sich der elastisch rückstellbare Dichtkörper (3; 13; 23) ausdehnt und an die Aussenwandung des hindurchgeführten Leitungsstrangs (10) anlegt.

2. Verfahren nach Anspruch 1, **dadurch gekennzeichnet, dass** der elastische Dichtkörper (3; 13; 23) komprimiert im Bauteil (9) eingebaut wird.

3. Verfahren nach Anspruch 1 oder 2, **dadurch gekennzeichnet, dass** der elastische Dichtkörper (13; 23) von einem zusätzlichen Rahmenteil (12; 22) umgeben ist und mit dem zusätzlichen Rahmenteil (12; 22) im Bauteil (9) eingebaut wird.

4. Verfahren nach einem der Ansprüche 1 bis 3, **dadurch gekennzeichnet, dass** die Führungshülse (4; 14; 29, 30, 31, 32) mehrteilig ausgebildet ist, wobei die einzelnen Teile (6; 16) nach dem Hindurchführen des Leitungsstrangs (10) separat aus den Durchführöffnungen (5; 15; 25, 26, 27, 28) herausziehbar sind.

5. Verfahren nach Anspruch 4, **dadurch gekennzeichnet, dass** mehrere Führungshülsen (29, 30, 31, 32) in einem Dichtkörper (23) angeordnet sind, durch die mehrere Leitungsstränge hindurchführbar sind.

6. Verfahren nach einem der Ansprüche 1 bis 5, **dadurch gekennzeichnet, dass** zumindest ein entfernbares Verschlusselement (33) in der Führungshülse (29) vorgesehen wird.

## Claims

1. Process with a device (1; 11; 21) to take up a cable section (10) through a channel (8) formed in a structural part (9), the said channel (8) having an elastic sealing body (3; 13; 23) with at least one opening (5; 15; 25, 26, 27, 28), whereby there is a removable bush (4; 14; 29, 30, 31, 32) in the opening (5; 15; 25, 26, 27, 28) whereby the outer dimensions of the bush (4; 14; 29, 30, 31, 32) extend beyond the inner dimensions of the opening (5; 15; 25, 26, 27, 28) when the seal is not under loading,
**characterized by** the following stages:
- introduction of the device (1; 11; 21) into the structural part (9) whereby the removable bush (4; 14; 29, 30, 31, 32) is already in the at least one opening (5; 15; 25, 26, 27, 28);
- a cable section (10) is passed through the at least one opening (5; 15; 25, 26, 27, 28) of the seal (3; 13; 23);
- the bush (4; 14; 29, 30, 31, 32) is drawn out of the opening (5; 15; 25, 26, 27, 28) in the seal (3; 13; 23) whereby the elastically returning seal (3; 13; 23) extends and lies on the outer surface of the cable section (10) that has been fed through.

2. Process in accordance with claim 1, **characterized in that** the elastic seal (3; 13; 23) is introduced, compressed, into the structural part (9).

3. Process in accordance with claims 2 and 3, **characterized in that** the elastic seal (3; 13; 23) is surrounded by an accessory frame section (12; 22) and is built into the structural part (9) with the accessory frame section (12; 22).

4. Process in accordance with one of claims 1 to 3, **characterized in that** the bushes (4; 14; 29, 30, 31, 32) have several sections, whereby the separate sections (6; 16) can be separately drawn out of the openings (5; 15; 25, 26, 27, 28) after the cable section (10) has been fed through.

5. Process in accordance with claim 4, **characterized in that** several bushes (29, 30, 31, 32), disposed in a seal (23), can have several cable sections can be fed through them.

6. Process in accordance with one of claims 1 to 5, **characterized in that** there is at least one removable stopping element (33) in the bush (29).

## Revendications

1. Procédé comprenant un dispositif (1 ; 11 ; 21) pour recevoir un faisceau de conduites (10) à travers un passage (8) ménagé dans un élément de construction (9), ledit dispositif comprenant un corps élastique d'étanchéité (3 ; 13 ; 23) pourvu d'au moins une ouverture traversante (5 ; 15 ; 25, 26, 27, 28), ouverture traversante (5 ; 15 ; 25, 26, 27, 28) dans laquelle est disposée un manchon de guidage amovible (4 ; 14 ; 29, 30, 31, 32) dont les dimensions extérieures excèdent les dimensions intérieures de l'ouverture traversante (5 ; 15 ; 25, 26, 27, 28) à l'état relâché du corps d'étanchéité (3 ; 13 ; 23), **caractérisé par** les étapes suivantes :
- mise en place du dispositif (1 ; 11 ; 21) dans l'élément de construction (9), le manchon de guidage amovible (4 ; 14 ; 29, 30, 31, 32) étant déjà disposé dans l'ouverture traversante au nombre d'au moins une (5 ; 15 ; 25, 26, 27, 28) ;
- passage d'un faisceau de conduites (10) à travers l'ouverture traversante au nombre d'au moins une (5 ; 15 ; 25, 26, 27, 28) du corps d'étanchéité (3 ; 13 ; 23) ;
- retrait du manchon de guidage amovible (4 ; 14 ; 29, 30, 31, 32) hors de l'ouverture traversante (5 ; 15 ; 25, 26, 27, 28), de sorte que le corps d'étanchéité à rétractation élastique (3 ; 13 ; 23) se dilate et se plaque contre la paroi extérieure du faisceau de conduites passé (10).

2. Procédé selon la revendication 1, **caractérisé en ce que** le corps élastique d'étanchéité (3 ; 13 ; 23) est mis en place dans l'élément de construction (9) en étant comprimé.

3. Procédé selon la revendication 1 ou 2, **caractérisé en ce que** le corps élastique d'étanchéité (13 ; 23) est entouré d'une pièce supplémentaire formant cadre (12 ; 22) et est mis en place dans l'élément de construction (9) avec la pièce supplémentaire formant cadre (12 ; 22).

4. Procédé selon une des revendications 1 à 3, **caractérisé en ce que** le manchon de guidage (4 ; 14 ; 29, 30, 31, 32) est conçu en plusieurs parties, les différentes parties (6 ; 16) pouvant être retirées séparément des ouvertures traversantes (5 ; 15 ; 25, 26, 27, 28) après le passage du faisceau de conduites (10).

5. Procédé selon la revendication 4, **caractérisé en ce que** plusieurs manchons de guidage (29, 30, 31, 32) à travers lesquels peuvent être passés plusieurs faisceaux de conduites sont disposés dans un corps d'étanchéité (23).

6. Procédé selon une des revendications 1 à 5, **caractérisé en ce qu'**au moins un élément de fermeture amovible (33) est disposé dans le manchon de guidage (29).
